# EUROPEAN PATENT SPECIFICATION

(11) **EP 1 968 417 B1**
(45) Date of publication and mention of the grant of the patent: **24.02.2016**
(21) Application number: 06830639.8
(22) Date of filing: 15.12.2006
(51) Int. Cl.: A47G 19/14, A47J 31/18

(54) **A COFFEEPOT**
KAFFEEKANNE
CAFETIERE

(30) Priority: 05.01.2006 TR 200600066
(43) Date of publication of application: 17.09.2008
(73) Proprietor: Arçelik Anonim Sirketi, 34950 Istanbul (TR)
(72) Inventor: HASANREISOGLU, Levent, 34950 Istanbul (TR)
(86) International application number: PCT/EP2006/069743
(87) International publication number: WO 2007/077105

(56) References cited:
- EP-A- 0 895 772
- EP-A1- 0 807 394
- EP-A1- 1 002 488
- DE-U1- 20 213 139
- GB-A- 334 422

## Description

The present invention relates to a coffeepot preferably used in coffee machines.

The coffeepots used in the coffee machines wherein the cooking process is carried out are manufactured using metal by means of moulding, deep drawing etc. methods. Production of desired quality metal coffeepots suitable for use in the coffee machines is possible by manufacturing methods which are considerably expensive and with high rate of wastage and the application of different designs is difficult. In some implementations, aluminum material is used which has a high thermal conductive capacity and is durable to heat, with low material costs, however aluminum can be easily deformed when dropped and all of its surfaces in contact with liquid have to be clad since it is susceptible to corrosion. Due to such disadvantages of metal, in some similar implementations, e.g. in kettles, the body is manufactured using plastic material, and metal is used in the base and in the vicinity of the heater. In kettles manufactured with plastic body and metal base, leak-proofing becomes important in the joints of plastic and metal, leak-proofing is tried to be provided by shaping the metal or by emplacing a gasket in between.

A coffee machine or a kettle described in the Great Britain patent document no. GB998750 comprises a thermoplastic body and a metallic base made of stainless steel or aluminum assembled to the bottom of the body. The edges of the base in connection with the heater and in direct contact with the liquid in the plastic body are shaped such that a socket is formed into which the bottom edges of the plastic body is fixed.

In the invention described in the Great Britain patent document no. GB 1529141, a body portion of transparent or translucent polycarbonate is assembled on a base portion of stainless steel, and in the joint of the plastic body and the edge of the metal base, the peripheral rib of the body is fitted into the recess on the edge of the metal base.

In the European Patent EP0895772 and in the Great Britain patent document no. GB719962, a vessel for heating liquids made of ceramic glass or a nonmetallic material is described.

The aim of the present invention is the realization of a coffeepot, preferably used in coffee machines, comprising a plastic body and a metal base.

The coffeepot realized in order to attain the aim of the present invention is explicated in the claims.

The coffeepot used in the coffee machine and wherein boiling is carried out, is composed of a plastic body and a metal base, manufactured separately from the body and joined to the body afterwards. The metal base is manufactured separately from the plastic body for convenience of manufacture and is joined later with the plastic body. The metal base is assembled to the body with a joining ring having a screw joint type periphery and the joining ring also serves as a leak-proofing gasket between the metal base and the plastic body.

The coffeepot realized in order to attain the aim of the present invention is illustrated in the attached figures, where:

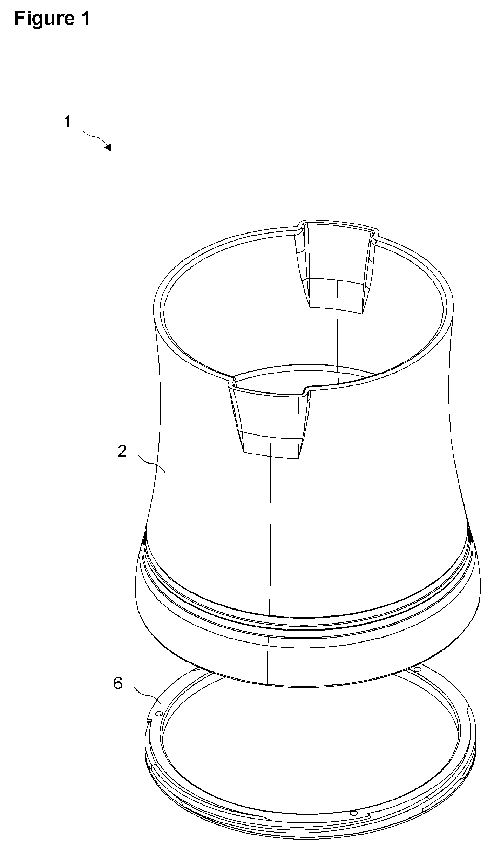

Figure 1 - is the perspective view of a body and a joining ring.

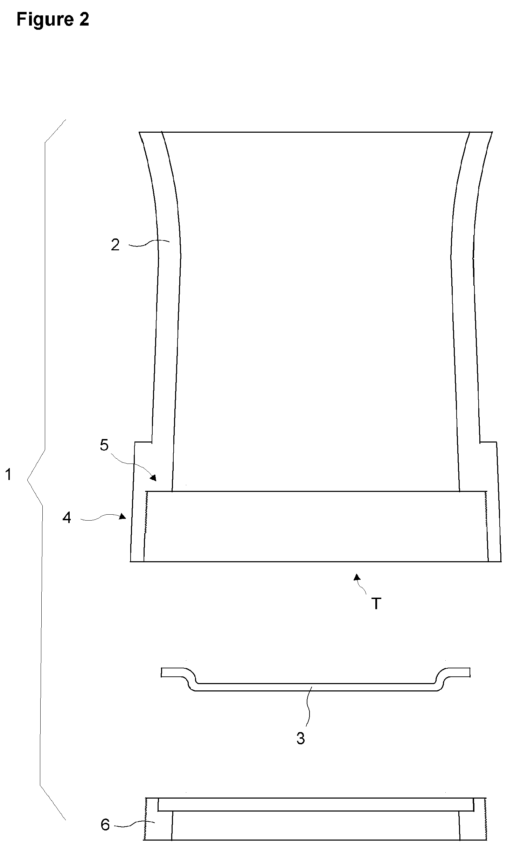

Figure 2 - is the exploded view of a coffeepot.

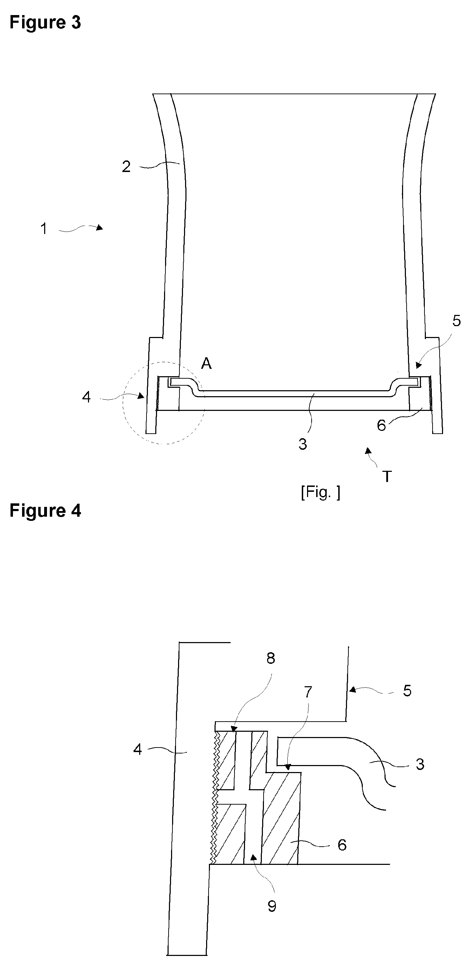

Figure 3 - is the schematic view of a coffeepot.
Figure 4 - is the view of detail A in Figure 3.

The elements illustrated in the figures are numbered as follows:
- 1.: Coffeepot
- 2.: Body
- 3.: Base
- 4.: Skirting
- 5.: Bearing projection
- 6.: Joining ring
- 7.: Base retaining surface
- 8.: Leak-proofing projection
- 9.: Assembly hole

The coffeepot (1) comprises a body (2) wherein boiling is carried out, made of plastic material and a base (3) joined with the body (2), providing to transfer heat from the heater by being emplaced on the heater.

The base (3) is manufactured using a metal like aluminum, copper having high heat conductivity or of iron, steel or nickel that can be heated by induction currents.

The coffeepot (1) comprises a base joining orifice (T), situated at the bottom of the body (2) upon which the base (3) is joined, a skirting (4) forming the circumference of the base joining orifice (T) at the bottom of the body (2), providing it to be seated on the floor, a bearing projection (5) extending towards the inner volume of the body (2) on which the base (3) bears on, emplaced to be joined with the body (2), and a joining ring (6) that
- is manufactured using plastic material,
- mounted on the base (3) emplaced on the bearing projection (5), providing to fit the base (3) tightly between the body (2) and itself,
- screwed on the inner wall of the skirting (4) such that it is peripherally in contact with the bearing projection (5) providing leak-proofing.

The side surface of the joining ring (6) and the inner wall of the skirting (4) is of a screw joint type and the joining ring (6) is mounted on the base (3) by being screwed to the inner wall of the skirting (4) from its side surface and provides the base (3) to exert pressure on the bearing projection (5). The screw threads on the side surface of the joining ring (6) are shaped of a self-locking pitch and are not allowed to get loose after being assembled.

The joining ring (6) comprises a base retaining surface (7) that fits tightly the side portion of the base (3) mounted on it in between the bearing projection (5) and itself and a leak-proofing projection (8) situated on the base retaining surface (7) providing leak-proofing by exerting pressure on the bearing projection (5) (Figure 5).

The body (2) is manufactured using plastic material in an injection mould separately from the metal base (3). After the body (2) is manufactured, the base (3) is inserted into the body (2) through the base joining orifice (T), emplaced on the bearing projection (5) and the joining ring (6) is mounted on the base (3) completing the assembly of the coffeepot (1). The joining ring (6) exerts pressure on the base (3) from the base retaining surface (7) providing it to be attached to the body (2), furthermore by means of the leak-proofing projection (8) being seated on the bearing projection (5), the joining ring (6) manufactured using plastic material and the bearing projection (5) manufactured using plastic material, exert pressure on each other providing leak-proofing.

In an embodiment of the present invention, the joining ring (6) comprises one or more assembly holes (9) that provides it to be screwed on the inner wall of the skirting (4) by turning with an apparatus inserted through and later pouring in an adhesive for fixing. In this embodiment, the assembly hole (9) extends to the screw threads on the side surface of the joining ring (6) and/or the leak-proofing projection (8) from the bottom surface of the joining ring (6), providing the adhesive poured in to reach the screwed inner wall of the skirting (4) and/or between the leak-proofing projection (8) and the bearing projection (5) (Figure 5).

In this embodiment, after the base (3) is assembled to the body (2), the joining ring (6) is brought over the base (3) and screwed on the inner wall of the skirting (4) with the apparatus attached to the assembly holes (9), after the apparatus is taken out, adhesive is dribbled on the assembly holes (9) and the coffeepot (1) is held with its base (3) upside until the adhesive dries. Consequently a leak-proof and a durable base (3)- body (2) joint is achieved.

By way of the plastic body (2) and the metal base (3) joint, a low cost coffeepot (1) with an easy manufacturing method is provided that is resistant to corrosion and bending. Since the body (2) that gets narrower from the bottom upwards is not manufactured in one piece with the base (3), it can easily be taken out of the mould, the base (3) is joined with the body (2) in a leak-proof way by means of the joining ring (6) and a durable base (3)-body (2) joint is provided by means of the assembly holes (9).

The coffeepot (1) is used in coffee machines, particularly in coffee machines suitable for making Turkish coffee.

## Claims

1. A coffeepot (1) comprising a body (2) made of plastic material and a base (3) joined with the body (2) manufactured using metal, and **characterized by** a skirting (4) forming the circumference of the base joining orifice (T) situated at the bottom of the body (2), providing it to be seated on the floor, a bearing projection (5) extending towards the inner volume of the body (2) on which the base (3) bears on that is emplaced to be joined with the body (2), and a joining ring (6) that is manufactured using plastic material, mounted on the base (3) emplaced on the bearing projection (5), providing to fit the base (3) tightly between the body (2) and itself, screwed on the inner wall of the skirting (4) such that it is in contact with the bearing projection (5) peripherally, providing leak-proofing.

2. A coffeepot (1) as in Claim 1, **characterized by** a joining ring (6) with its side surface shaped as screw type joint and a skirting (4) with its inner wall shaped as screw type joint.

3. A coffeepot (1) as in Claim 1 and 2, **characterized by** a joining ring (6) comprising a base retaining surface (7) that fits tightly the side portion of the base (3) seated on it between the bearing projection (5) and itself.

4. A coffeepot (1) as in Claim 3, **characterized by** joining ring (6) comprising a leak-proofing projection (8) situated on the base retaining surface (7) providing leak-proofing by exerting pressure on the bearing projection (5).

5. A coffeepot (1) as in any one of the above claims, **characterized by** joining ring (6) comprising one or more assembly holes (9) that provides it to be screwed on the inner wall of the skirting (4) by turning with an apparatus inserted through and later pouring in an adhesive for fixing in place.

6. A coffeepot (1) as in Claim 5, **characterized by** a joining ring (6) comprising an assembly hole (9) that extends from the bottom surface of the joining ring (6) to the screw threads on the side surface of the joining ring (6) and/or the leak-proofing projection (8) providing the adhesive poured in to reach the screwed inner wall of the skirting (4) and/or between the leak-proofing projection (8) and the bearing projection (5).

7. A coffeepot (1) as in any one of the above claims that is utilized in coffee machines suitable for making Turkish coffee.

## Patentansprüche

1. Kaffeekanne (1), umfassend einen Körper (2) aus einem Kunststoffmaterial und eine Basis (3), die mit dem Körper (2) verbunden und aus Metall hergestellt sind, und **gekennzeichnet durch** eine Sockelleiste (4), die den Umfang der Basisverbindungsöffnung (T) an der Unterseite des Körpers (2) bildet und es ermöglicht, diesen auf den Boden zu stellen, einen Anlagevorsprung (5), der sich zum Innenvolumen des Körpers (2) erstreckt, an dem die Basis (3) anliegt und der angeordnet ist, um mit dem Körper (2) verbunden zu sein, und einen Verbindungsring (6), der aus Kunststoffmaterial hergestellt ist, an der Basis (3) angebracht ist, die auf den Anlagevorsprung (5) gesetzt ist, und für eine enge Einpassung der Basis (3) zwischen dem Körper (2) und sich selbst sorgt und derart mit der Innenwand der Sockelleiste (4) verschraubt ist, dass er am Umfang mit dem Anlagevorsprung (5) in Kontakt steht und für Dichtigkeit sorgt.

2. Kaffeekanne (1) nach Anspruch 1, **dadurch gekennzeichnet, dass** die Seitenfläche des Verbindungsrings (6) als Schraubverbindung geformt ist und die Innenwand der Einfassung (4) als Schraubverbindung geformt ist.

3. Kaffeekanne (1) nach Anspruch 1 und 2, **gekennzeichnet durch** einen Verbindungsring (6), der eine Basishaltefläche (7) umfasst, die eng am Seitenabschnitt der Basis (3) anliegt, welche darauf zwischen dem Anlagevorsprung (5) und ihr selbst aufsitzt.

4. Kaffeekanne (1) nach Anspruch 3, **dadurch gekennzeichnet, dass** der Verbindungsring (6) einen Dichtungsvorsprung (8) umfasst, der an der Basishaltefläche (7) angeordnet ist und für Dichtigkeit sorgt, indem er Druck auf den Anlagevorsprung (5) ausübt.

5. Kaffeekanne (1) nach einem der vorangehenden Ansprüche, **dadurch gekennzeichnet, dass** der Verbindungsring (6) eine oder mehrere Montageöffnungen (9) umfasst, mit denen er mit der Innenwand der Einfassung (4) verschraubt werden kann, indem er mit einer Vorrichtung gedreht wird, die durch sie hindurch geführt wird, woraufhin zum Befestigen ein Klebstoff eingefüllt wird.

6. Kaffeekanne (1) nach Anspruch 5, **gekennzeichnet durch** einen Verbindungsring (6), der eine Montageöffnung (9) umfasst, die sich von der Bodenfläche des Verbindungsrings (6) zum Schraubgewinde an der Seitenfläche des Verbindungsrings (6) und/oder dem Dichtungsvorsprung (8) erstreckt und dafür sorgt, dass der eingefüllte Klebstoff die verschraubte Innenwand der Einfassung (4) und/oder den Raum zwischen dem Dichtungsvorsprung (8) und dem Anlagevorsprung (5) erreicht.

7. Kaffeekanne (1) nach einem der vorangehenden Ansprüche, die in Kaffeemaschinen verwendet wird, die zum Zubereiten von türkischem Kaffee geeignet sind.

## Revendications

1. Un pot de café (1) comprenant un corps (2) produit en plastique et une base (3) qui est jointe avec le corps (2) et qui produite en métal, et **caractérisé par** un rebord (4) formant la circonférence de l'orifice (T) qui joint la base et qui est situé au bas du corps (2) et qui permet son placement sur le sol, une protubérance d'appui (5) qui s'étend vers le volume intérieur du corps (2), sur laquelle la base (3), qui est placée pour se joindre avec le corps (2), s'appuie, et un anneau de liaison (6) qui est produit en plastique, qui est monté sur la base (3) placée sur la protubérance d'appui (5), qui assure que la base (3) est placée fermement entre le corps (2) et lui-même, qui est vissé sur la paroi intérieure du rebord (4) de manière à être en contact avec la protubérance d'appui (5) de manière périphérique et qui permet imperméabilité.

2. Un pot de café (1) selon la Revendication 1, **caractérisé par** un anneau de liaison (6) dont la surface latérale est en forme d'un joint à vis et un rebord (4) dont la paroi intérieure est en forme d'un joint à vis.

3. Un pot de café (1) selon la Revendication 1 et 2, **caractérisé par** un anneau de liaison (6) comprenant une surface de retenue de base (7) qui place fermement la partie latérale de la base (3) placée sur celle-là entre la protubérance d'appui (5) et elle-même.

4. Un pot de café (1) selon la Revendication 3, **caractérisé par** l'anneau de liaison (6) comprenant une protubérance d'étanchéité (8) qui est située sur la surface de retenue de base (7) et qui permet l'imperméabilité en exerçant de pression sur la protubérance d'appui (5).

5. Un pot de café (1) selon l'une quelconque des revendications précédentes, **caractérisé par** l'anneau de liaison (6) comprenant un ou plusieurs trous de montage (9) qui lui permettent d'être vissé sur la paroi intérieure du rebord (4) en tournant par un appareil y inséré et ensuite versant un adhésif pour fixer en place.

6. Un pot de café (1) selon la Revendication 5, **caractérisé par** un anneau de liaison (6) comprenant un trou de montage (9) qui s'étend à partir de la surface inférieure de l'anneau de liaison (6) aux filetages sur la surface latérale de l'anneau de liaison (6) et/ou la protubérance d'étanchéité (8), permettant au adhésif y versé d'atteindre la paroi intérieure filetée du rebord (4) et/ou entre la protubérance d'étanchéité (8) et la protubérance d'appui (5).

7. Un pot de café (1) selon l'une quelconque des revendications précédentes, qui est utilisé dans des machines à café appropriées pour préparer le café turc.
